Europäisches Patentamt

European Patent Office

Office européen des brevets

(11) Veröffentlichungsnummer: **0 485 814 A1**

# EUROPÄISCHE PATENTANMELDUNG

(21) Anmeldenummer: **91118641.9**

(22) Anmeldetag: **31.10.91**

(51) Int. Cl.5: **C04B 22/06**, C04B 28/02, C04B 38/02, //(C04B28/02, 22:06,38:02,40:06),(C04B28/02, 24:12,38:02,40:06),(C04B28/02, 22:10,38:02,40:06),(C04B28/02, 22:14,38:02,40:06)

(30) Priorität: **06.11.90 DE 4035236**

(43) Veröffentlichungstag der Anmeldung: **20.05.92 Patentblatt 92/21**

(84) Benannte Vertragsstaaten: **AT BE CH ES FR IT LI LU NL**

(71) Anmelder: **Wachter KG.Hindelang Baustoffwerk Bautechnik**

**W-8973 Hindelang/Allgäu(DE)**

(72) Erfinder: **Schäfer, Rudolf, Dipl.-Ing. (FH) Gartenstrasse 3 W-8978 Burgberg(DE)**

(74) Vertreter: **Staeger, Sigurd, Dipl.-Ing. et al Patentanwälte Dipl.-Ing. S. Staeger Dipl.-Ing. Dipl.-Wirtsch.-Ing. R. Sperling Müllerstrasse 31 W-8000 München 5(DE)**

(54) **Werktrockenmörtel für erhöhten Porengehalt.**

(57) Bei einem Werktrockenmörtel mit erhöhtem Porengehalt wird der Trockensubstanz eine Peroxoverbindung mit 0,1 - 2,0 Gew.-%, vorzugsweise 0,3 - 0,8 Gew.-%, zugesetzt, deren Sauerstoffabspaltung sofort nach Zugabe von Wasser oder Wasserdampf ausgelöst wird.

EP 0 485 814 A1

Die Erfindung bezieht sich auf einen Werktrockenmörtel für erhöhten Porengehalt.

Es ist z.B. aus der DE-PS 30 41 107 bekannt, den Mischeffekt eines Werktrockenmörtels zu erhöhen und gleichzeitig auch die Einführung von Luftporen in das Mischgut bzw. den Mörtel auf mechanische Weise zu verbessern.

Es ist weiterhin bekannt, sogen. Luftporenbildner dem Mörtel zuzugeben, wobei eine Schaumbildung durch die entsprechende Mischintensität bewirkt wird. Unter Luftporenbildnern versteht man oberflächenaktive organische Substanzen (Tenside), wie z.B. Olefinsulfonat und Laurylsulfonat. Bei einer ausreichenden Mischzeit bzw. Mischintensität läßt sich eine entsprechende Porenbildung erreichen. Auch ist es bekannt, bei der Herstellung von Porenbeton wasserstoffabspaltende Mittel (z.B. Alu-Pulver) zu verwenden. Da jedoch die $H_2$-Abspaltung sehr langsam anspringt, kann die erhaltene Porenerhöhung erst nach einem gewissen Zeitraum, z.B. nach 30 min, gemessen werden. Wasserstoffabspaltende Zusatzmittel eignen sich daher nicht für diesen Zweck, da z.B. bei Sanierputzen der Porengehalt unmittelbar nach der Herstellung gemessen werden muß.

Auf der anderen Seite werden bei sog. Spezialputzen, z.B. Sanierputze, besonders hohe Luftporengehalte gefordert; so verlangt das WTA-Merkblatt "Sanierputze" von diesen Porengehalte von mehr als 25%, gemessen nach DIN 18555, Teil 2. Abgesehen davon ist bisher noch kein Mittel bekannt, durch dessen Zugabemenge der Luftporengehalt direkt gesteuert werden kann und dies auch in kurz mischenden Maschinen, wie den heute üblichen Putz- und Mörtelmischpumpen (z.B. m-tec M3, Putzknecht S48, PFT G4 usw.).

Der Erfindung liegt daher die Aufgabe zugrunde, einen Werktrockenmörtel mit erhöhtem Porengehalt vorzuschlagen, bei dem durch dosierte Zugabe eines chemischen Stoffes der Luftporengehalt gesteuert entsteht und auch sofort gemessen werden kann.

Die Aufgabe wird dadurch gelöst, daß erfindungsgemäß der Trockensubstanz eine Peroxoverbindung mit 0,1 - 2,0 Gew.-%, vorzugsweise 0,3 - 0,8 Gew.-%, zugesetzt ist, deren Sauerstoffabspaltung sofort nach Zugabe von Wasser oder Wasserdampf ausgelöst wird. Die erhaltene Trockensubstanz mit dem Zusatz ist lagerbeständig und dieser hat nur geringe Nebenwirkungen auf die anderen Mörtelbestandteile.

Ein besonders bevorzugtes Persulfat ist Kaliumperoxomonosulfat, welches im Handel in Form von "Tripelsalz", $2KHSO_3$, $KHSO_4$, $K_2SO_4$, erhältlich ist. Von den Percarbonaten ist besonders Natriumpercarbonat zu erwähnen.

Es hat sich herausgestellt, daß ungefähr 0,1% Tripelsalz praktisch eine Erhöhung des Porengehalts im Werktrockenmörtel von etwa 1% zur Folge hat. Diese Porenbildung ist unabhängig von der Mischart.

Vergleichsbeispiel 1

Bei einem handelsüblichen Sanierputz wird unter Verwendung einer normalen Putzmaschine (m-tec M3) und einer üblichen Schneckenpumpe ein Porengehalt von ca. 15% erreicht. Wenn dagegen der Trockensubstanz für den gleichen Sanierputz 0,5% "Tripelsalz" zugesetzt wird, konnte unmittelbar nach dem Anmischen in der gleichen Maschine ein Porengehalt von 20 - 22% gemessen werden. Der Porengehalt hat sich somit um 5 - 7% erhöht.

Vergleichsbeispiel 2

Der oben erwähnte Sanierputz wird mit einer m-tec M3-Maschine gespritzt, die mit einem Spezialrohr ausgerüstet ist, das eine intensivere und verlängerte Mischwirkung zeigt. Hierbei wurde ein Porengehalt von 18% im Fertigputzmörtel gemessen.

Wenn demgegenüber der Trockensubstanz des gleichen Sanierputzes 0,5% des Kaliumperoxomonosulfats zugegeben wird, erhöht sich der Porengehalt auf 28%.

Die praktischen Versuche gemäß den oben angegebenen Beispielen haben gezeigt, daß die erfindungsgemäßen Zusatzmittel auch dann verwendet werden können, wenn nachfolgend z.B. mechanische Luftporenbildner nach dem Stand der Technik Verwendung finden: es hat sich dann ein synergetischer Effekt erwiesen, d.h. bei normalen Putzmaschinen mit kurzer Mischzeit beträgt die Erhöhung des Porengehalts etwa 1% pro 0,1% Zusatz des erfindungsgemäßen Mittels; eine Erhöhung auf etwa 2% kann dann erreicht werden, sobald die Mischintensität höher liegt. Hierfür ist vielleicht die Gasbildung verantwortlich, die die physikalisch wirkenden Luftporenbildner zusätzlich anregen.

Vergleichsbeispiel 3

Die Zunahme der Porenerhöhung durch verschiedene Zusatzmengen des Tripelsalzes in einem handelsüblichen Sanierputz zeigt Diagramm 1. Dabei wurde der Sanierputz jeweils im Labormischer nach DIN 18555 angemischt und unmittelbar anschließend der Luftporengehalt gemessen. Weitere Erhöhungen der Zusatzmittelzugabe bei diesem Produkt beeinträchtigen die Konsistenz stark und ergeben deshalb keinen praktischen Sinn.

Vergleichsbeispiel 4

Die Porenerhöhung durch verschiedene Zusatzmengen des Tripelsalzes in einem handelsüblichen Mauermörtel (Werktrockenmörtel) zeigt Diagramm 2. Hier zeigt sich entgegen dem Vergleichsbeispiel 3, daß auch Zusatzmengen von 1,2 - 2,0% eine etwa stetige Erhöhung des Porengehalts erbringen.

Vergleichsbeispiel 5

Es soll die Lagerfähigkeit des Zusatzmittels in einem Trockenmörtel zeigen:
Es wurde einem handelsüblichen Sanierputz 1% des Tripelsalzes zugesetzt und dieser offen bei einer Luftfeuchtigkeit von ca. 80% gelagert und nach vrschiedenen Lagerzeiten der Porengehalt bei gleicher Mischzeit gemessen:

| Lagerzeit (d) | 1 | 14 | 21 | 30 |
|---|---|---|---|---|
| Porengehalt (%) | 30 | 29 | 30 | 28 |

Es zeigt sich also, daß der Porengehalt praktisch stabil bleibt, auch nach 30 Tagen Lagerzeit des Trockenmörtels, trotz ungünstiger Lagerbedingungen (offen, hohe Luftfeuchtigkeit). Das Zusatzmittel erfüllt also auch nach üblichen Lagerzeiten zwischen Produktion im Werk und Verarbeitung auf der Baustelle noch seine Aufgabe.

Vergleichsbeispiel 6

Dieses Vergleichsbeispiel zeigt die Wirkungsweise eines anderen Sauerstoff-abspaltenden Zusatzmittels, nämlich von Natriumpercarbonat ($2Na_2CO_3$, $3H_2O_2$). Es werden 1% des Mittels einem handelsüblichen Kalk-Zement-Putz (Werktrockenmörtel) zugesetzt. Es ergeben sich ohne Zusatzmittel bei einer Einstreuzeit von 15 s und einer Mischzeit von 30 s 8% Poren, mit dem Zusatzmittel (1%) ein Porengehalt von 11%. Es hat sich hier also eine Erhöhung des Porengehalts um 3% ergeben.

Diagramm 1

## Luftporenerhöhung durch Tripelsalz
### im Sanierputz

Einsatzmenge Tripelsalz [%]

Diagramm 2

Luftporenerhöhung durch Tripelsalz

im Mauermörtel

Einsatzmenge Tripelsalz [%]

**Patentansprüche**

1. Werktrockenmörtel für erhöhten Porengehalt, dadurch gekennzeichnet, daß der Trockensubstanz eine Peroxoverbindung mit 0,1 - 2,0 Gew.-%, vorzugsweise 0,3 - 0,8 Gew.-%, zugesetzt wird, deren Sauerstoffabspaltung sofort nach Zugabe von Wasser oder Wasserdampf ausgelöst ist.

2. Werktrockenmörtel nach Anspruch 1, dadurch gekennzeichnet, daß die Peroxoverbindung ein Metall-Peroxid oder ein Carbamidperoxid ist.

3. Werktrockenmörtel nach Anspruch 1, dadurch gekennzeichnet, daß die Peroxoverbindung ein Persulfat, vorzugsweise ein Carbamidpersulfat oder ein Kaliumperoxomonosulfat ist.

4. Werktrockenmörtel nach Anspruch 1, dadurch gekennzeichnet, daß die Peroxoverbindung ein Percarbonat, vorzugsweise Natriumpercarbonat, ist.

5. Werktrockenmörtel nach Anspruch 1, dadurch gekennzeichnet, daß die Peroxoverbindung eine Peroxosäure, vorzugsweise eine Peressigsäure, ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-2 758 950 (STERLING DRUG INC.) <br> * Seite 7, letzter Absatz - Seite 8, Absatz 3; Ansprüche 1,2,5-8 * <br> --- | 1-5 | C04B22/06 <br> C04B28/02 <br> C04B38/02 <br> // (C04B28/02, |
| A | FR-A-2 630 729 (INTEROX S.A.) <br> * Seite 2, Zeile 33 - Seite 3, Zeile 22 * <br> * Seite 4, Zeile 6 - Zeile 27 * <br> --- | 1,2,4 | 22:06, 38:02 <br> 40:06) <br> (C04B28/02, <br> 24:12, 38:02 |
| A | DE-A-3 632 247 (BONEX EPITÖIPARI KÖZÖS VALLALAT) <br> * Spalte 2, Zeile 67 - Spalte 3, Zeile 54 * <br> --- | 1,2 | 40:06) <br> (C04B28/02, <br> 22:10, 38:02 |
| A | DE-C-572 259 (LEICHTBAUSTOFF G.M.B.H.) <br> * das ganze Dokument * <br> ----- | 1-5 | 40:06) <br> (C04B28/02, <br> 22:14,38:02 <br> 40:06) <br> (C04B28/02, <br> 24:04, 38:02 <br> 40:06) |

**RECHERCHIERTE SACHGEBIETE (Int. Cl.5 )**

C04B

Der vorliegende Recherchenbericht wurde für alle Patentansprüche erstellt

| Recherchenort | Abschlußdatum der Recherche | Prüfer |
|---|---|---|
| DEN HAAG | 06 FEBRUAR 1992 | THEODORIDOU E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)